# EUROPEAN PATENT APPLICATION

(11) **EP 1 944 458 A1**
(43) Date of publication of application: **16.07.2008**
(21) Application number: 06822772.7
(22) Date of filing: 01.11.2006
(51) Int. Cl.: E06B 9/384, E06B 9/24, E06B 9/303

(54) **LIGHT DISTRIBUTION CONTROL DEVICE, GREENHOUSE, PARTITION AND BUILDING**

(30) Priority: 01.11.2005 JP 2005318613
(71) Applicant: Kabushiki Kaisha S.T.I. Japan, Tokyo 113-0034 (JP)
(72) Inventor: OYAMA, Nobuo, 1130034 Bunkyo-ku (JP); TAKAHASHI, Sumie, Tokyo 113-0034 (JP)
(74) Representative: TBK-Patent
(86) International application number: PCT/JP2006/321843
(87) International publication number: WO 2007/052694

(57) **Abstract**

Light distributing members (1) are inserted into corresponding multiple openings (7) in ladder tapes (2, 3) and are loosely fitted there. When one ladder tape (2) is pulled upwardly and the other ladder tape (3) is pulled downwardly, respective weft yarns (6) of the ladder tape (2) come into contact with lower surfaces of the corresponding light distributing members (1) to apply an upward lifting force F1 to the light distributing members (1) and respective weft yarns (6) of the other ladder tape (3) come into contact with upper surfaces of the corresponding light distributing members (1) to apply an downward pushing force F2 to the light distributing members (1). Accordingly, each of the light distributing member (1) is held between the weft yarn (6) positioned at a lower end of the each opening (7) of one ladder tape (2) and the weft yarn (6) positioned at an upper end of the each opening (7) of the other ladder tape (3).

## Description

### TECHNICAL FIELD

The present invention relates to a light distribution control device, and more particularly, to a light distribution control device having multiple thin plate-like light distributing members.
Further, the present invention also relates to a greenhouse, a partition and a building using the light distribution control device.

### BACKGROUND ART

Conventionally, lighting of a room has been adjusted through installation of a Venetian blind at a window through which outside light enters. As disclosed, for example, in Patent Document 1, in the Venetian blind, multiple slats oriented in a horizontal direction are arranged and held vertically by means of ladder tapes.
A ladder tape includes a pair of front and rear vertical tapes and multiple weft yarns extended between the pair of vertical tapes at predetermined vertical intervals, forming a ladder-like structure having multiple openings each defined by the pair of vertical tapes and a pair of the weft yarns. The multiple slats are inserted into the corresponding openings, and are placed in position on the weft yarns by a gravitational force. By pulling the pair of vertical tapes in opposite directions, the weft yarns are tilted between the pair of vertical tapes, with the result that the slats placed in position on the weft yarns are tilted around the longitudinal axes thereof . In some cases, cords may be used instead of the vertical tapes.

[Patent Document 1] JP 09-189179 A

### DISCLOSURE OF THE INVENTION

### PROBLEMS TO BE SOLVED BY THE INVENTION

However, since the slats are retained solely by being placed on the corresponding weft yarns, if some external force is applied to the slats, the slats are easily moved to change their inclination. If the blind is installed not in the vertical direction but in the horizontal or an oblique direction, the slats cannot be aligned in their inclination.
There has also been proposed a blind in which each weft yarn includes two yarns and a slat is inserted to be retained between the two yarns. However, this has a problem in that an operation of inserting the slat between the two yarns at the time of production requires a lot of time and effort.
Apart from this, there exists a blind in which multiple elongated slats oriented in the vertical direction are arranged in the horizontal direction. In this blind, the inclination of the slats is varied by turning a mounting portion at an upper end of the slats within a horizontal plane. However, it frequently occurs that some irregularity in inclination is involved at lower ends of the elongated slats.

The present invention has been made with a view toward solving the above problems. It is accordingly an object of the present invention to provide a light distribution control device which can retain multiple thin plate-like light distributing members without involving any irregularity in tilt even if an external force is applied thereto or if they are installed in the horizontal or an oblique direction and which can be manufactured easily.
The present invention also aims to provide a greenhouse, a partition and a building using the light distribution control device.

### MEANS FOR SOLVING THE PROBLEMS

A light distribution control device according to the present invention includes: multiple light distributing members each formed as an elongated and narrow thin plate; and a plurality of holding members for holding the light distributing members so as to be arranged parallel to each other, the holdingmembers extending in a direction crossing the light distributing members and having multiple openings into which corresponding light distributing members are loosely fitted, a part of the holding members and the remaining holding members being pulled in opposite directions, whereby the light distributing members are held between edge portions of the openings of the part of the holding members and edge portions of the openings of the remaining holding members.

When the flexible holding members are used, the inclination of the light distributing members can be adjusted with respect to an arrangement direction of the multiple light distributing members by changing a shape of the multiple openings.
Each of the holding members includes a ladder tape that includes: a pair of longitudinal tapes or longitudinal cords parallel to each other and extending in the arrangement direction of the multiple light distributing members; and multiple weft yarns extended between the pair of longitudinal tapes or longitudinal cords and arranged at predetermined intervals in a longitudinal direction of the longitudinal tapes or longitudinal cords. The weft yarns of the ladder tape may be formed of a rigid material. Further, both the weft yarns and the longitudinal tapes or longitudinal cords of the ladder tape may be formed of a rigid material. In this case, the weft yarns may be provided so that a change in angle can be made with respect to the longitudinal tapes or longitudinal cords. Preferably, a light distribution control device includes at least three holding members spaced apart from each other in a longitudinal direction of the light distributing members.

Each of the light distributing members may be formed of a light diffusion structure. In this case, there may be employed a structure in which the light diffusion structure exhibits at least one of optical transparency and optical reflectivity, and has multiple ridges arrayed in parallel and in sufficient proximity to each other at least on a surface on which light is incident or through which light passes, each of the ridges having a section, taken along a line orthogonal to a longitudinal direction of the ridges, which substantially constitutes a part of a circle, each of the ridges having a surface which is practically specular, when a parallel beam having a diameter larger than a width of each of the ridges is entered into the multiple ridges, a center of the beam diffusing in a form of a cone surface or a half-cone surface around a central axis constituting a line passing a point of incidence of substantially a central line of the beam and parallel to the ridges.
Further, each of the ridges is formed such that the outer edge of a section thereof taken along the line orthogonal to the longitudinal direction of the ridges forms an arc portion having an angle of circumference of 140 degrees or more. Further, an interval between the centers of the adjacent ridges may be 1 µm to 2 mm.
A Venetian blind whose slats are formed of the light distributing members may be formed.

A greenhouse according to the present invention includes the above-mentioned light distribution control device installed horizontally or obliquely above a cultivated plant. A plurality of light distribution control devices may be installed at different levels above a cultivated plant. Further, a plurality of light distribution control devices may be installed directly above and between a plurality of multi-stage type cultivation racks.
A partition according to the present invention uses the above-mentioned a light distribution control device.
Further, a building according to the present invention includes the above-mentioned light distribution control device installed at a window through which outside light enters.

### EFFECTS OF THE INVENTION

According to the present invention, it is possible to realize a light distribution control device in which light distributing members are loosely fitted into multiple corresponding openings of a plurality of holding members, and in which a part of the plurality of holding members and the remaining holding members are pulled in opposite directions, whereby the light distributing members are held between the edge portions of the openings of the part of the holding members and the edge portions of the openings of the remaining holding members, so the multiple thin-plate-like light distributing members are firmly held, and if an external force is applied thereto, or if they are installed horizontally or obliquely, no irregularity in the inclination of the light distributing members is involved.

### BRIEF DESCRIPTION OF THE DRAWINGS

Fig. 1 is a partial perspective view of a light distribution control device according to Embodiment 1 of the present invention.
Fig. 2 is a partial sectional view of the light distribution control device of Embodiment 1.
Fig. 3 is a front view of the light distribution control device of Embodiment 1.
Fig. 4 is a front view of a light distribution control device according to a modification of Embodiment 1.
Fig. 5 is a partial perspective view of a light distribution control device according to Embodiment 2.
Fig. 6 is a partial side view illustrating an operation of a light distribution control device according to Embodiment 3.
Fig. 7 is a partial side view illustrating an operation of a light distribution control device according to a modification of Embodiment 3.
Fig. 8 is a partial perspective view of a light distribution control device according to Embodiment 4.
Fig. 9 is a diagram for illustrating an effect of a light distribution control device according to Embodiment 5.
Fig. 10 is a partial perspective view of the light distribution control device of Embodiment 5.
Figs. 11A and 11B are sectional views illustrating the effect of the light distribution control device of Embodiment 5, respectively.
Figs. 12A to 12H are sectional views showing various forms of a light diffusion structure used in the light distribution control device of Embodiment 5, respectively.
Fig. 13 is an enlarged sectional view showing a ridge of the light diffusion structure of Embodiment 5.
Figs. 14A to 14C are sectional views showing various forms of a light distributing member of a light distribution control device according to Embodiment 6, respectively.
Fig. 15 is a sectional view showing a light distribution control device according to Example 1.
Fig. 16 is a side view showing a modification of Example 1.
Fig. 17 is a side view showing another modification of Example 1.
Fig. 18 is a perspective view showing still another modification of Example 1.
Fig. 19 is a plan view showing yet still another modification of Example 1.

### BEST MODES FOR CARRYING OUT THE INVENTION

In the following, embodiments of the present invention will be described with reference to the accompanying drawings.

### Embodiment 1

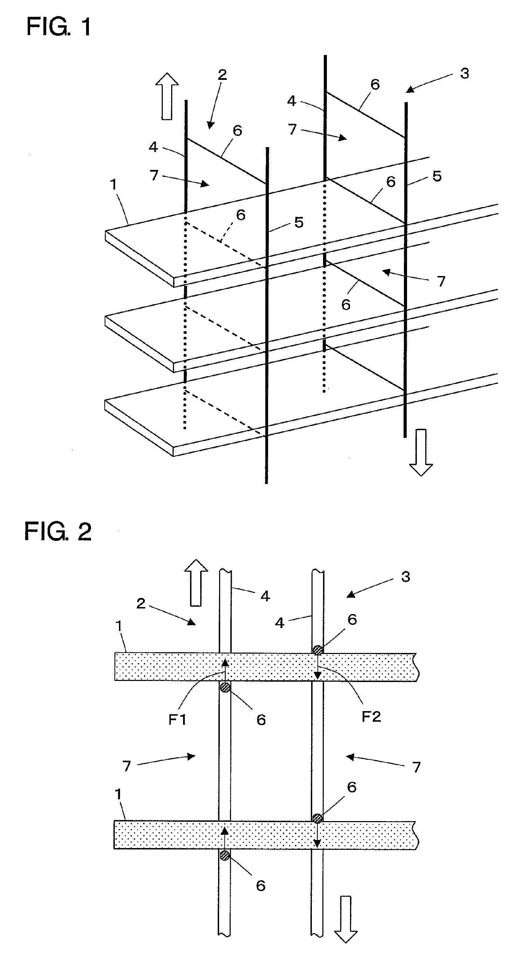

Fig. 1 shows a light distribution control device according to Embodiment 1. The light distribution control device is formed as a Venetian blind having multiple light distributing members 1 with shading property as slats. The multiple light distributing members 1 are formed as thin and narrow plates and are oriented horizontally. They are arranged in a vertical direction in parallel to each other and at predetermined intervals by a plurality of ladder tapes 2, 3. Each of the ladder tapes 2, 3 is formed by a pair of longitudinal tapes (or longitudinal cords) 4 and 5 parallel to each other and extending in an arrangement direction of the light distributing members 1, that is, in the vertical direction, and multiple weft yarns 6 extended between the longitudinal tapes 4 and 5, and exhibits flexibility. The multiple weft yarns 6 are provided at predetermined intervals in the longitudinal direction of the longitudinal tapes 4 and 5. An opening 7 is defined by the pair of longitudinal tapes 4 and 5 and a pair of adjacent weft yarns 6, and each of the ladder tapes 2, 3 exhibits a ladder-like configuration having multiple openings 7.

A corresponding light distributing member 1 is inserted into each of such openings 7 and is loosely fitted therein. Here, when one ladder tape 2 is pulled upwards and the other ladder tape 3 is pulled downwards, each of the weft yarns 6 of the ladder tape 2 comes into contact with a lower surface of the corresponding light distributing member 1, as shown in Fig. 2, to apply an upward lifting force F1 to the light distributing member 1, and each of the weft yarn 6 of the other ladder tape 3 comes into contact with an upper surface of the corresponding light distributing member 1 to apply a downward pushing force F2 to the light distributing member 1. As a result, each light distributing member 1 is held between the weft yarn 6 situated at a lower end of each opening 7 of one ladder tape 2 and the weft yarn 6 situated at an upper end of each opening 7 of the other ladder tape 3.

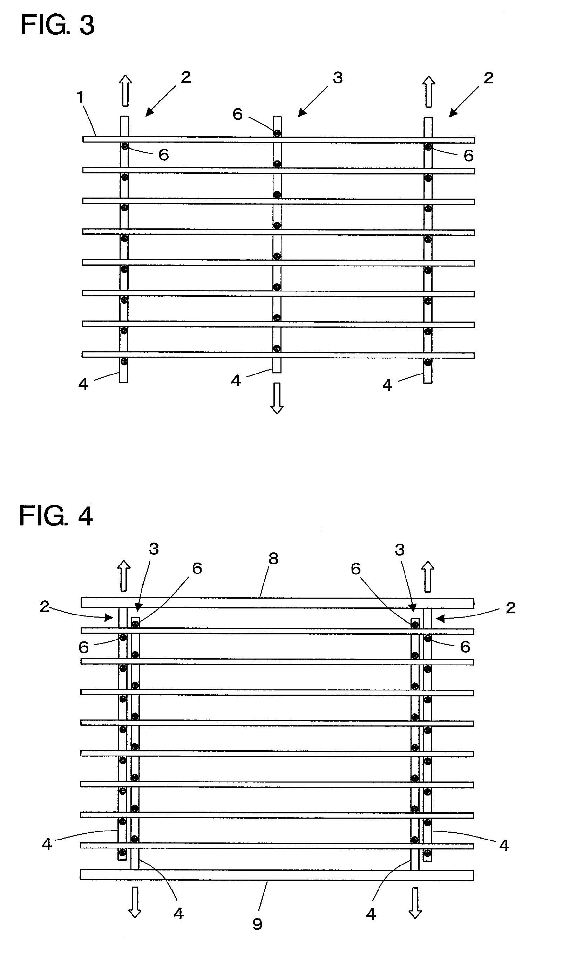

For example, as shown in Fig. 3, the light distributing members 1 are inserted into the openings 7 of the ladder tapes 2 respectively arranged near longitudinal ends of the light distributing members 1 and into the openings 7 of the ladder tape 3 arranged near a longitudinal center of the light distributing member 1. The two ladder tapes 2 are pulled upwardly and the one ladder tape 3 is pulled downwardly, whereby the light distributing members 1 are held between the weft yarns 6 of the ladder tapes 2 and the weft yarns 6 of the ladder tape 3, and are arranged vertically in parallel at predetermined intervals.
Due to this arrangement, the multiple light distributing members 1 are held firmly, and no irregularity is generated in the inclination of the light distributing members 1 if some external force is applied to the light distributing members 1.

As shown in Fig. 3, it is possible to hold the light distributing members 1 by using at least three ladder tapes 2, 3 spaced apart from each other in the longitudinal direction of the light distributing members 1. However, as shown in Fig. 4, it is also possible to arrange the ladder tapes 2 and 3 close to each other near each of the longitudinal ends of the light distributing members 1.
Here, a mounting member 8 is arranged on the top of the multiple light distributing members 1 and a mounting member 9 is arranged at the bottom thereof. The upper ends of the longitudinal tapes 4 and 5 of the ladder tapes 2 are connected to the upper mounting member 8 while the lower ends of the longitudinal tapes 4 and 5 of the ladder tapes 3 are connected to the lower mounting member 9, and the upper mounting member 8 is fixed to a stationary object such as a window frame (not shown) and the lower mounting member 9 is allowed to dangle without being fixed to a stationary object. As a result, a downward pulling force acts on the ladder tapes 3 due to the gravitational force acting on the lower mounting member 9, and the light distributing members 1 are pulled downwards via the weft yarns 6 of the ladder tapes 3 so that, combined with the gravitational force acting on the light distributing members 1, the light distributing members 1 are pressed against the weft yarns 6 of the ladder tapes 2. Consequently, the ladder tapes 2 and 3 are pulled in opposite directions, whereby the light distributing members 1 are held between the weft yarns 6 of the ladder tapes 2 and the weft yarns 6 of the ladder tapes 3.

In the case that the lower mounting member 9 is fixed to a stationary object, it is possible to apply tensile forces in opposite directions to the ladder tapes 2 and 3 by pulling the upper mounting member 8 upwardly.
Instead of using the mounting members 8 and 9, it is also possible to connect the upper ends of the longitudinal tapes 4 and 5 to the uppermost light distributing member 1 and to connect the lower ends of the longitudinal tapes 4 and 5 to the lowermost light distributing member 1, with the uppermost light distributing member 1 being fixed to a stationary object.
Further, as long as it is possible to hold the light distributing members 1 between the weft yarns 6 of a part of the ladder tapes and the weft yarns 6 of the remaining ladder tapes by pulling the part of the ladder tapes and the remaining ladder tapes in opposite directions, the number and arrangement positions of the plurality of ladder tapes may be selected as appropriate according to a length of the light distributing members 1 and so on.

### Embodiment 2

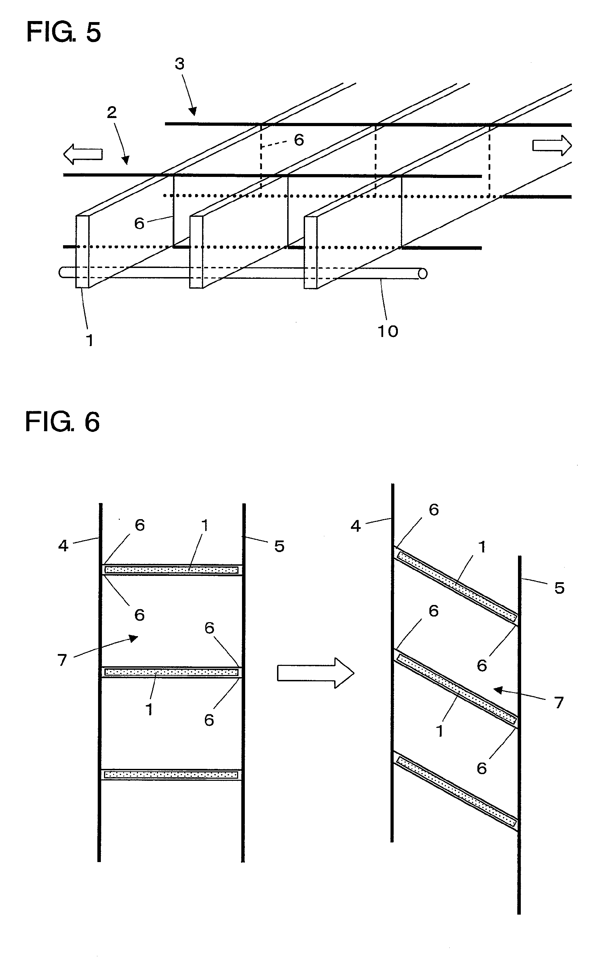

As shown in Fig. 5, it is also possible to arrange multiple light distributing members 1 horizontally and to hold the light distributing members 1 by horizontally extending ladder tapes 2, 3. For example, in Fig. 5, by pulling the ladder tape 2 to the left and pulling the ladder tape 3 to the right, the light distributing members 1 are held between the weft yarns 6 of the ladder tape 2 and the weft yarns 6 of the ladder tape 3. It is also possible to pull the ladder tape 2 to the left and pull the ladder tape 3 to the right with pulling devices (not shown). Further, it is also possible to apply tensile forces in opposite directions to the ladder tapes 2 and 3 by pulling one of the ladder tapes 2, 3 with a pulling device in a state that the other of the ladder tapes 2, 3 is fixed to a stationary object.
In this case, to prevent falling or drooping of the light distributing members 1, it is desirable to place the light distributing members 1 on a rigid bar member 10 or the like extended in the horizontal direction.
Similarly, it is also possible to arrange the light distributing members 1 in an oblique direction inclined from the horizontal direction by a predetermined angle or in a curved direction and to hold them by the ladder tapes 2, 3.

### Embodiment 3

As shown in Fig. 6, in the light distribution control device of Embodiment 1 described above, when the configuration of each opening 7 formed by the pair of longitudinal tapes 4 and 5 and the pair of adjacent weft yarns 6 is changed from a rectangle to a parallelogram by moving one longitudinal tape 4 of each of the ladder tapes 2, 3 in the longitudinal direction with respect to the other longitudinal tape 5, the weft yarns 6 become oblique with respect to the longitudinal tapes 4 and 5, whereby the light distributing members 1 held between the weft yarns 6 of the ladder tape 2 and the weft yarns 6 of the ladder tape 3 are inclined. Thus, by varying the relative moving mount of the longitudinal tape 4 and the longitudinal tape 5 in the longitudinal direction, it is possible to adjust the inclination of the light distributing members 1 with respect to the arrangement direction.

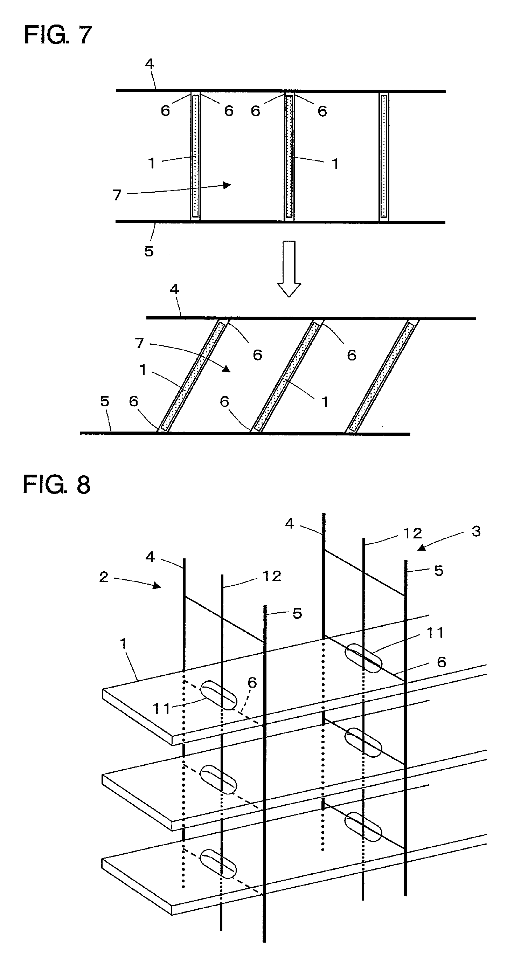

Similarly, as shown in Fig. 7, also when the multiple light distributing members 1 are arranged in a horizontal direction, an oblique direction or a curved direction as in the case of the light distribution control device of Embodiment 2, the inclination of the light distributing members 1 can be adjusted by varying the relative moving amount in the longitudinal direction of the longitudinal tape 4 and the longitudinal tape 5 of each ladder tape 2, 3.

### Embodiment 4

As shown in Fig. 8, in the light distribution control device of Embodiments 1 through 3 described above, when through-holes 11 are formed at the center in the width direction of each light distributing member 1 and expansion/contraction cords 12 are passed through the through-holes 11 with one end of each expansion/contraction cord 12 being fixed to the light distributing member 1 situated at the end in the arrangement direction or to the mounting member 9, it is possible to fold up the multiple light distributing members 1 by winding up the expansion/contraction cords 12. Conversely, by drawing out the expansion/contraction cords 12 from the light distributing members 1 in a folded up state, it is possible to develop the multiple light distributing members 1.

When the multiple light distributing members 1 are arranged in the vertical direction as in the case of the light distribution control device of Embodiment 1, the multiple light distributing members 1 can be developed solely by drawing out the expansion/contraction cords 12 due to the gravitational force of the light distributing members 1 and the mounting member 9. On the other hand, when the multiple light distributing members 1 are arranged in a horizontal direction, an oblique direction or a curved direction as in the case of the light distribution control device of Embodiment 2, the multiple light distributing members 1 can be developed by drawing the light distributing member or the mounting member 9 to which one end of each expansion/contraction cord 12 is fixed.

### Embodiment 5

Using optical fibers and round bars of various diameters, the inventor of the present inventionmade prototypes of a light diffusion structure having ridges, and conducted examination on respective distribution of light diffusion. As a result, it was found that in case of multiple ridges being arrayed in parallel and sufficiently / substantially close to each other, the curved edge of the cross section of the each ridge being circular, and the surface of the each ridge being substantially specular, then a pencil light "A" incident at a point "i" on the surface of the structure is diffused along a circular-conical plane which has its vertex at the point "i" by diffraction-effect caused with the array of the ridges in either its reflection or its transmittance, wherein the reflected diffusion light goes along a half-circular-conical plane, while the transmitted diffusion light goes along the rest half-circular-conical plane.
Examination on diffraction light was performed by using light transmitting bodies in the form of optical fibers or round bars of various diameters. As a result of the examination, it was found out that as a diameter of the light transmitting body is increased in a range of, for example, 0.25 mm or more, a reduction in the quantity of diffraction light is to be observed. In the field of application for the present invention, a diameter of 2 mm or more may lead to deterioration in function for practical use, and a problem may be involved when installing the light distribution control device due to the increase in the light distributing members.

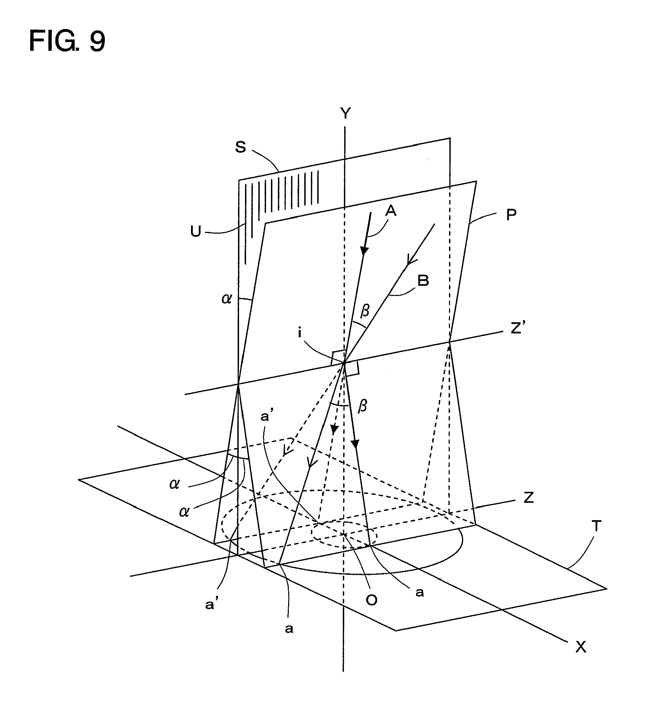

Such diffusion along a circular-conical plane has the following characteristics in addition to the above. As shown in Fig. 9, an orthogonal coordinate system is assumed in which a line which passes through the point "i" and is parallel to a longitudinal direction of ridges "U" is set as Y-axis, then X-axis and Z-axis orthogonal to Y-axis are added. In this orthogonal coordinate system, when the thickness of the planar structure is neglected, an YZ-plane corresponds to the structure. The YZ-plane is set as a plane S. An XZ-plane orthogonal to the Y-axis at a coordinate origin "O" located below the point "i" is set as a plane T. An axis which passes through the point "i" and is parallel to the Z-axis is set as a Z'-axis. A plane including the Z'-axis and crossing the plane S at an acute angle "α" is set as a plane P.

When the plane S is assumed to be specular and a pencil light "A" travels on the plane P and is incident to the plane S at the point "i", the intersection point of the plane T and the reflected pencil light of the pencil light "A" and the intersection point of the plane T and the transmitted pencil light of the pencil light "A" are referred to as "a" and "a"', respectively. A half of a circle having the line segment "Oa" joining the point "a" and the origin point "O" as its radius becomes the cross section of the reflected diffused light of the pencil light "A" on the plane T. A half of a circle having the line segment "Oa'" joining the point "a"' and the origin "O" as its radius becomes the cross section of the diffused light of the pencil light "A" on the plane T. As in the case of light "B" incident on the plane S of the structure, when an acute angle β at which the light passing through the incident point "i" crosses an XY plane which is parallel to the ridges U and perpendicular to the plane S becomes larger, the spread of the diffused flux increases.

The luminance in a direction in such diffused flux shows the maximum value in the direction of reflected rays or transmitted rays with the plane "S" wherein plane "S" is assumed as flat specular surface. The luminance decreases linearly as (the direction of a diffused ray is) setting far from the direction with which the maximum value is shown, corresponding the angle with the direction showing such maximum value. Uniformity of the luminance distribution on the direction of (diffused rays in) the diffused flux (herein after referred to as "luminance distribution of diffused flux) can be improved by selecting circumferential angle or radian, the maximum diameter of orthogonal cross section of each of such ridges and the proximity between the adjacent ridges.

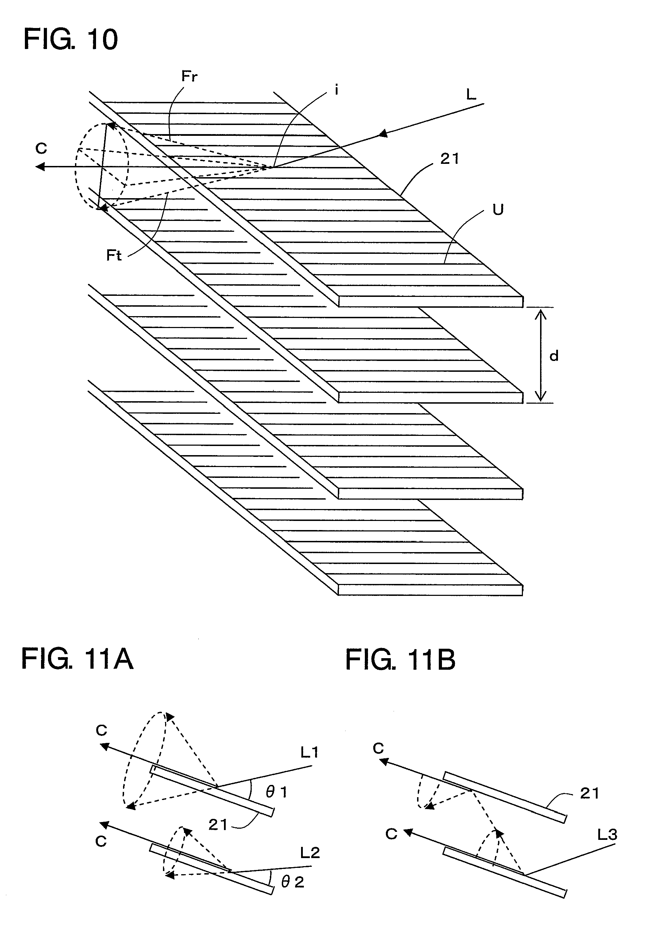

In view of this, as shown in Fig. 10, light diffusion structures 21 in the form of elongated and narrow thin plates having multiple ridges U as described above were used as the light distributing members 1 of the light distribution control device of Embodiments 1 through 4 described above. The ridges U of the structures 21 are formed so as to cross a longitudinal direction of each of the structures 1, more specifically, to be orthogonal thereto. The structures 21 are arrayed such that the corresponding faces of the adjacent structures 21 are parallel to each other and apart from each other at a predetermined distance as well as the ridges U of the adjacent structures 21 are parallel to each other. In Fig. 10, the ridges U are schematically expressed by simple line segments in order to indicate the direction of formation thereof. In fact, the ridges U, each of which has the cross section forming a portion of a substantial circle and the surface being practically specular, are arrayed sufficiently close to each other on the surface of the each structure 21.

The each structure 1 has both optical transparency and optical reflectivity. As shown in Fig. 10, when light L is incident at the point "i" on the surface of the structure 21 at an incident angle, In either its reflection or its transmittance, the light L is diffused along a circular conical plane which has the vertex with the point "i" and the center axis C with a line parallel to the ridges U by a diffraction effect caused by the arrayed ridges U. The reflected diffused flux of light Fr is spread in a lengthwise half of the circular conical plane and the transmitted diffused flux of light Ft is spread in the remaining lengthwise half of circular conical plane. The center axis C of the diffused flux of light is directed constantly in parallel to the ridges U without depending on the incident angle of the light L. For example, as shown in Fig. 11A, incident light L1 on the surface of the structure 21 at an incident angle θ1 and incident light L2 thereon at an incident angle θ2 are diffused in the respective circular conical plane having center axes C in the same direction.

The light distribution control device is located such that the ridges U of each of the structures 21 are aligned in the desired direction for light distribution. Therefore, light incident to the surface of the each structure 21 is diffused along a circular conical plane which has the center axis C in the direction parallel to the ridges U i. e. in the desired direction for distribution of light, either in its reflection or transmittance. Thus, light can be efficiently diffused in a desirable direction to perform light distribution.

When each of the structures 21 has at least optical transparency, the ridges U may be formed on either one of the principal surfaces, opposing each other, of the each structure 21. For example, in the case of the structures 21 shown in Fig. 10, the ridges U are formed on an upper surface of each thereof. However, the ridges U can be formed on a lower surface of each of the structures 21. When the ridges U are formed on both of the opposed principal surfaces, the diffusion effect is further improved.
When each of the structures 21 has only optical transparency with no optical reflectivity, only the transmitted diffused flux Ft is spread in a lower lengthwise half of a circular conical plane in Fig. 10. However, a light distribution in the desirable direction can be made similarly.

In contrast, when each of the structures 21 has only optical reflectivity with no optical transparency, only the reflected diffused flux Fr is spread in an upper lengthwise half of a circular conical plane in Fig. 10. However, a light distribution in the desirable direction is made similarly. When the each structure 21 has only the optical reflectivity, it is sufficient to form the ridges U only on the surface irradiated with incident light, which is one of the principal surfaces being opposite to each other in the each structure 21. However, when the ridges U are formed on both of the principal surfaces, as in the case of incident light L3 shown in Fig. 11B, the reflected diffused flux given by the ridges U on the upper surface of a lower structure 21 is diffused by the ridges U on the lower surface of a structure 21 located just above the lower structure 21. Thus, more effective diffused light distribution is realized.

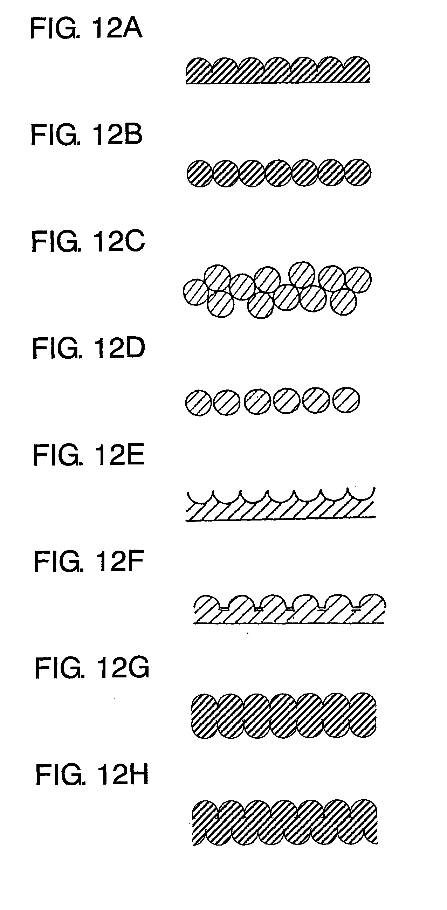

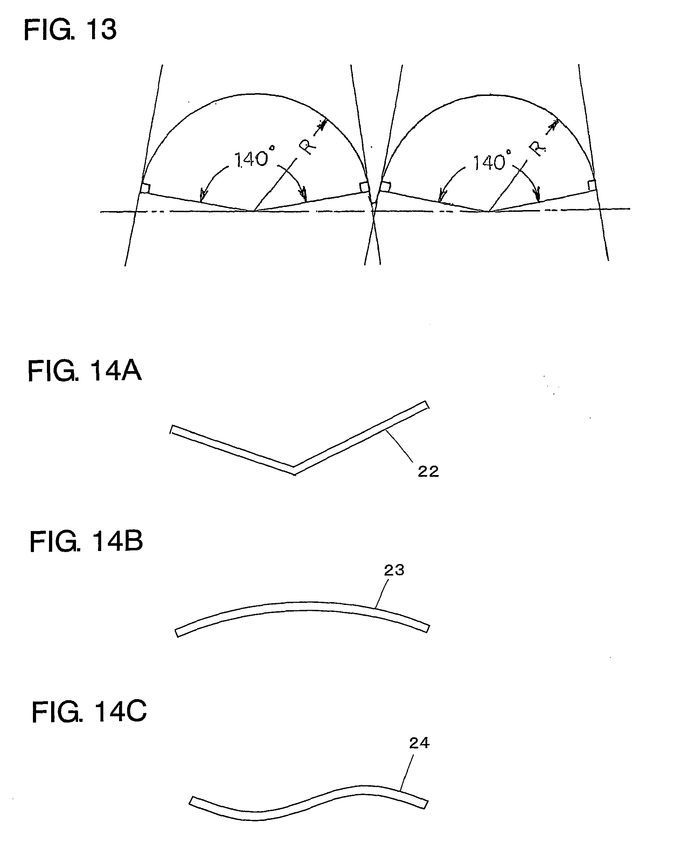

Ridges having various cross sections as shown in, for example, Figs. 12A to 12H can be used as the ridges U. It is necessary to employ the ridges U, each of whose cross section forms a portion of a substantial circle and surface is a practically specular surface. Further, it is desirable that an interval between the centers of the adjacent ridges U is 1 µm to 1 mm.
When the structure 21 is to be formed having the ridges U connected with each other on the adjacent arc portions as shown in Figs. 12A, 12E, 12G and 12H, the commercial production of such structure can be realized by an extrusion process by having the circumferential angle of the arc portion of the each ridge to be equal to or larger than 140 degrees, and adding a straight line portion in the tangent line direction at each end of the arc portion extended to a depth substantially equal to the radius of the each ridge U, being measured from the apex of the each ridge U, so that the each ridge contacts the adjacent ridge at this point, as shown in Fig. 13.

### Embodiment 6

While each structure 21 used in the light distribution control device of Embodiment 5 has a flat configuration, it is also possible to adopt, as the light distributing member 1, a structure 22 whose section taken in a direction orthogonal to the longitudinal direction is bent or V-shaped as shown in Fig. 14A, a structure 23 of a curved configuration as shown in Fig. 14B, or a structure 24 having an S-shaped curved configuration as shown in Fig. 14C.

In Embodiments 1 through 6 described above, the flexible ladder tapes 2, 3 are used. However, the weft yarns of the ladder tapes may be formed of rigid bar members or the like. This helps to achieve an improvement in terms of the attitude retention of each light distributing member 1.
When there is no need to fold up the arrangement of the light distributing members 1, it is also possible to form both the weft yarns and the longitudinal tapes or the longitudinal cords of the ladder tapes from a rigid material. In this case, when the weft yarns are provided so as to allow a change in angle with respect to the longitudinal tapes or the longitudinal cords, it is possible to retain each light distributing member 1 accurately at a desired inclination angle by moving the pair of longitudinal tapes or longitudinal cords in opposite directions. However, when there is no need to change the inclination angle of the light distributing members 1, it is not necessary for the angle made by the weft yarns and the longitudinal tapes or longitudinal cords to be variable.
Further, the light distribution control device of Embodiments 1 through 6 described above can be used as a means for lighting and light distribution using not only sunlight but also artificial illumination.

### EXAMPLES

### Example 1

In Embodiment 6, a blind type light distribution control device was prepared using, as the light distributing members, light diffusion structures each having a section of a V-shaped configuration taken along a line orthogonal to the longitudinal direction thereof as shown in Fig. 14A and having ridges formed in parallel on both surfaces thereof, each ridge being formed such that the outer edge of a section thereof taken in a direction orthogonal to the longitudinal direction thereof forms a circle portion having a radius of 0.25 mm and an angle of circumference of 160 degrees and that the interval of the adjacent ridges was 5 µm, and using a plurality of ladder tapes. This light distribution control device was placed in position horizontally above various objects, and sunlight was applied thereto from above, with the result that the shadows of the various objects arranged below the light distribution control device substantially disappeared.

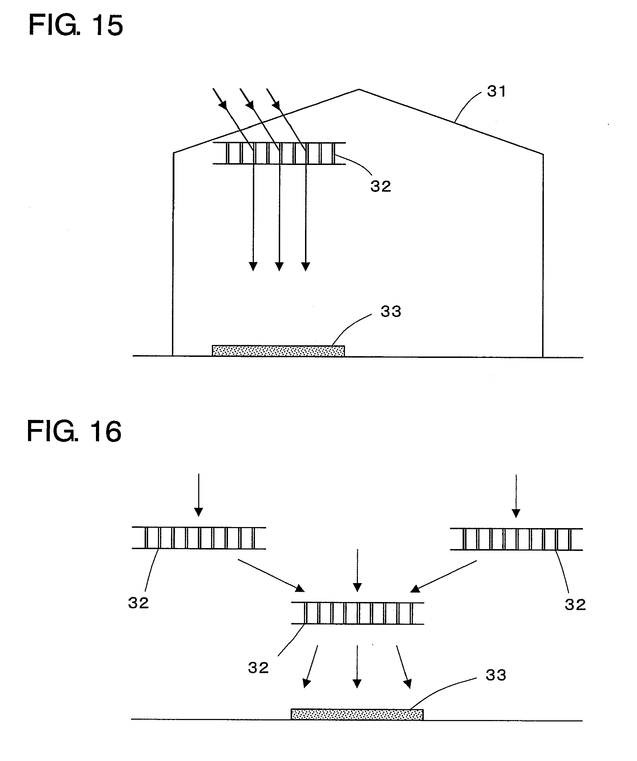

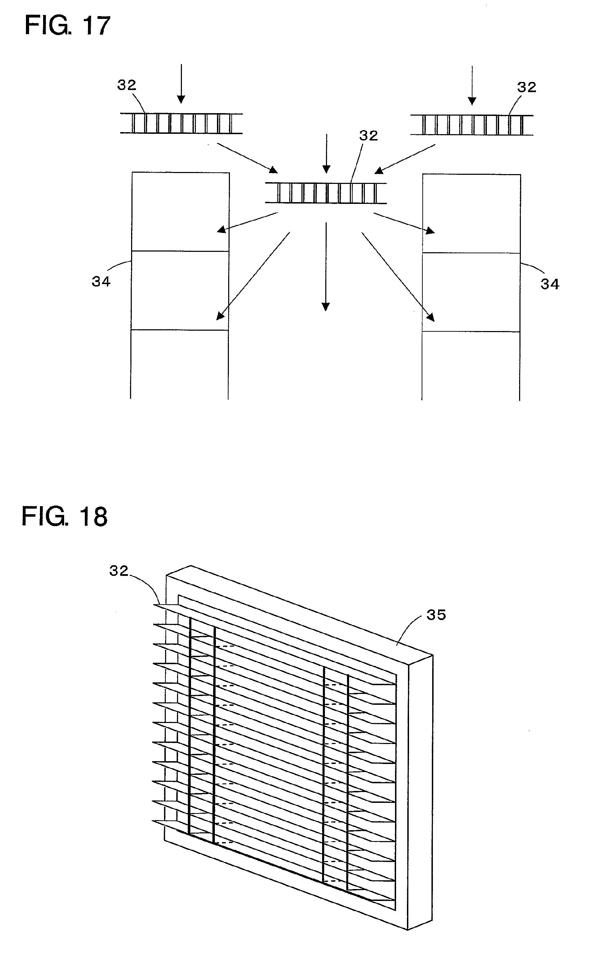

By using the light distribution control device of Example 1 in a greenhouse, it is possible to make the interior of the greenhouse free of shadows and to uniformly effect light distribution on a multi-stage type cultivation rack.
That is, as shown in Fig. 15, by arranging a light distribution control device 32 according to Example 1 horizontally or obliquely above a cultivated plant 33 in a greenhouse 31, substantially no shadow is formed on the cultivated plant 33 situated below the light distribution control device 32.
As shown in Fig. 16, when a plurality of light distribution control devices 32 are arranged at different heights above the cultivated plant 33, diffused light from the upper light distribution control device 32 enters the lower light distribution control device 32, so it is possible to apply still more light to the cultivated plant 33.
As shown in Fig. 17, when a plurality of multi-stage type cultivation racks 34 are arranged side by side, and light distribution control devices 32 are installed directly above the multi-stage type cultivation racks 34 and between the cultivation racks 34, a part of the diffused light from the light distribution control devices 32 situated in the upper location enters the light distribution control device 32 between the cultivation racks 34, and, combines with the sunlight directly entering the light distribution control device 32 situated between the cultivation racks 34, a lot of sunlight is applied to the cultivated plants on the lower shelves of the cultivation racks 34.
It is also possible to perform effective light distribution with sunlight not only in a greenhouse but also to an open-field culture through arrangement of the light distribution control devices 32 as shown in Figs. 15, 16, and 17.

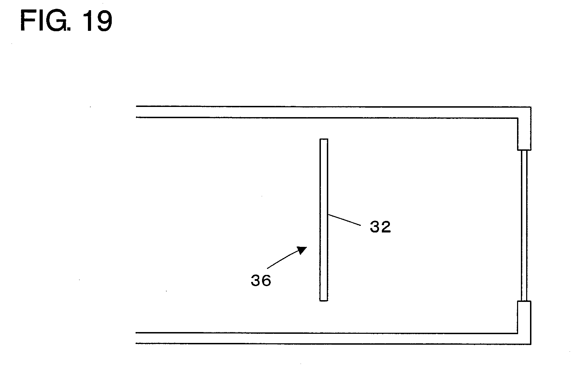

As shown in Fig. 18, by installing the light distribution control device 32 of Example 1 on the inner side or the outer side of a window 35 of a building, it is possible to take in sunlight deep into the building as diffused light.
Further, as shown in Fig. 19, it is also possible to form a partition 36 using the light distribution control device 32 of Example 1.

When the light distribution control device 32 of Example 1 is arranged vertically in use as shown in Fig. 18 or 19, it is possible to attain the same effect regardless of whether the light distributing members of a V-shaped sectional configuration are open upwardly or downwardly.
When the length of one side of the light distributing member of a V-shaped sectional configuration is larger than the width of the light distributing member, the light distributing member can be easily placed in position between the weft yarns of the pair of ladder tapes by making the width of the ladder tape pressing that side equal to the length of that side or somewhat larger than that.

### Example 2

In the light distribution control device of Example 1, there were formed ridges extending parallel to each other not in the direction orthogonal to the longitudinal direction of the light distributing member but in the longitudinal direction thereof on the surface of each light distributing member of a V-shaped sectional configuration situated on the indoor side, and this light distribution control device was mounted on the inner side of a window. As a result, it was possible to take in sunlight deep into the building as diffused light.
Also in the case of a light distributing member whose sectional configuration is not V-shaped but a flat, curved or S-shaped one, the same effect was obtained by forming ridges extending parallel to each other not in the direction orthogonal to the longitudinal direction of the light distributing member but in the longitudinal direction thereof on the surface of the light distributing member situated on the indoor side.

In Examples 1 and 2, instead of forming the ridges overall on both surfaces of the light distributing member, it is also possible to form the ridges solely on one surface, in a part of each of the both surfaces or in a part of one surface according to the use thereof.

## Claims

1. A light distribution control device comprising:
multiple light distributing members each formed as an elongated and narrow thin plate; and
a plurality of holding members for holding the light distributing members so as to be arranged parallel to each other,
the holding members extending in a direction crossing the light distributing members and having multiple openings into which corresponding light distributing members are loosely fitted,
a part of the holding members and the remaining holding members being pulled in opposite directions, whereby the light distributing members are held between edge portions of the openings of the part of the holding members and edge portions of the openings of the remaining holding members.

2. A light distribution control device according to Claim 1, wherein the holding members have flexibility,
inclination of the light distributing members being adjusted with respect to an arrangement direction of the multiple light distributing members by changing a shape of the multiple openings.

3. A light distribution control device according to Claim 2, wherein each of the holdingmembers comprises a ladder tape including:
a pair of longitudinal tapes or longitudinal cords parallel to each other and extending in the arrangement direction of the multiple light distributing members; and
multiple weft yarns extended between the pair of longitudinal tapes or longitudinal cords and arranged at predetermined intervals in a longitudinal direction of the longitudinal tapes or longitudinal cords.

4. A light distribution control device according to Claim 3, wherein the weft yarns of the ladder tape are formed of a rigid material.

5. A light distribution control device according to Claim 4, wherein the longitudinal tapes or longitudinal cords of the ladder tape are formed of a rigid material.

6. A light distribution control device according to Claim 5, wherein the weft yarns are provided so that a change in angle can be made with respect to the longitudinal tapes or longitudinal cords.

7. A light distribution control device according to Claim 1, wherein the plurality of holding members comprises at least three holding members spaced apart from each other in a longitudinal direction of the light distributing members.

8. A light distribution control device according to Claim 1, wherein each of the light distributing members comprises a light diffusion structure.

9. A light distribution control device according to Claim 8, wherein the light diffusion structure exhibits at least one of optical transparency and optical reflectivity, and has multiple ridges arrayed in parallel and in sufficient proximity to each other at least on a surface on which light is incident or through which light passes, each of the ridges having a section, taken along a line orthogonal to a longitudinal direction of the ridges, which substantially constitutes a part of a circle, each of the ridges having a surface which is practically specular,
when a parallel beam having a diameter larger than a width of each of the ridges is entered into the multiple ridges, a center of the beam diffusing in a form of a cone surface or a half-cone surface around a central axis constituting a line passing a point of incidence of substantially a central line of the beam and parallel to the ridges.

10. A light distribution control device according to Claim 9, wherein each of the ridges is formed such that the outer edge of a section thereof taken along the line orthogonal to the longitudinal direction of the ridges forms a circle portion having an angle of circumference of 140 degrees or more.

11. A light distribution control device according to Claim 9, wherein an interval between the centers of the adjacent ridges is 1 µm to 2 mm .

12. A light distribution control device according to Claim 1, for forming a Venetian blind whose slats are formed of the light distributing members.

13. A greenhouse comprising the light distribution control device according to Claim 1 installed horizontally or obliquely above a cultivated plant.

14. A greenhouse according to Claim 13, wherein a plurality of the light distribution control devices according to Claim 1 are installed at different levels above the cultivated plant.

15. A greenhouse according to Claim 13, wherein a plurality of the light distribution control devices according to Claim 1 are installed directly above and between a plurality of multi-stage type cultivation racks.

16. A partition using the light distribution control device according to Claim 1.

17. Abuilding comprising the light distribution control device according to Claim 1 installed at a window through which outside light enters.
